Europäisches Patentamt

(19) European Patent Office

Office européen des brevets

(11) Publication number: **0 018 770**
**B1**

## (12) EUROPEAN PATENT SPECIFICATION

(45) Date of publication of patent specification: **20.10.82**

(51) Int. Cl.³: **B 60 T 17/04**

(21) Application number: **80301308.5**

(22) Date of filing: **23.04.80**

---

(54) **System protection valve.**

---

(30) Priority: **25.04.79 GB 7914480**

(43) Date of publication of application:
**12.11.80 Bulletin 80/23**

(45) Publication of the grant of the patent:
**20.10.82 Bulletin 82/42**

(84) Designated Contracting States:
**DE FR GB IT SE**

(56) References cited:
**DE - A - 2 233 144**
**DE - B - 2 143 733**
**DE - B - 2 525 146**
**DE - B - 2 833 788**
**FR - A - 2 316 106**
**FR - A - 2 377 916**
**FR - A - 2 380 170**

(73) Proprietor: **CLAYTON DEWANDRE COMPANY
LIMITED**
**P.O. Box 9 Titanic Works**
**Lincoln, LN5 7JL (GB)**

(72) Inventor: **Baines, Robert George**
**Somerset Close**
**Stow, Lincoln (GB)**
Inventor: **Coupland, Ralph**
**61 Rookery Lane**
**Stow, Lincoln (GB)**

(74) Representative: **Hartley, David et al,**
**c/o Withers & Rogers 4 Dyer's Buildings Holborn
London, EC1N 2AJT (GB)**

Courier Press, Leamington Spa, England.

This invention relates to protection valves for fluid operated systems, for example, the service brakes, spring operated brakes and auxiliary systems of a vehicle.

Such valves have to distribute fluid normally compressed air, to the system in a required sequence, to protect each system against loss of pressure in other systems and to enable all sound systems to be charged to a predetermined minimum operating pressure following system failure due to air leakage. The unit also enables the service systems to augment the supplementary systems.

In general, a protection valve includes a housing containing two or more valve elements each of which opens against a bias to admit fluid under pressure to an associated fluid operated system and comprises a plunger biased toward a position wherein it closes off an outlet port for connection to the associated system and carrying an inlet non-return valve which is movable relative to the plunger, to uncover a bleed by-pass in communication with the said port. Such a valve is described in FR—A—2.316.106. The non return valves isolate the respective systems in the event of excessive reduction in pressure due to, for example, failure of the air supply system. In the event of excessive loss of air pressure in one of the service systems, the plunger reseats thus isolating the failed system. The remaining systems can be charged but only to the opening pressure of the element in the failed system. This pressure normally being set at a level sufficient to provide secondary or residual braking.

DE—A—2.233.144 discloses a system protection valve according to the precharacterising part of claim 1 in which each valve element comprises a bleed hole through the inlet non-return valve leading via a bleed non-return valve to a bleed chamber which is permanently in communication with the outlet port for connection to the associated fluid operated system.

In multiple systems, it is often desirable to maintain preferential charging to the main service braking system and, to this end, one or more additional plunger type valve elements each associated with a supplementary system are connected (on parallel) to a flowpath linking the outlet ports associated with the service systems, the flow into the said flow-path at each junction being through a supplementary non-return valve (DE—B—2.525.146, fig. 2).

Excessive air leakage in one of the supplementary systems causes air pressure in the service systems to fall to the closing pressure of the element in the failed system, the air in the remaining supplementary system(s) being retained by the non-return valve in the plunger. The elements in the supplementary systems are set out so that their opening pressures are sufficient to enable the service systems to provide secondary or residual braking in the event of supplementary system failure due to air leakage.

The valve elements associated with the supplementary systems could not, however, be made identical with the service system elements since the bleed hole is active at zero pressure and above, so that in the event of a supplementary system failure, the service reservoirs feeding the supplementary system would also fail.

A protection valve for fluid operated systems according to this invention, having two or more valve elements each of which opens against a bias to admit fluid under pressure to an associated fluid operated system and comprising a plunger controlling communication between an inlet port for fluid under pressure and an outlet port for connection to the associated system, and carrying an inlet non-return valve relatively movable to the plunger and has therethrough a bleed hole leading via a bleed chamber to the outlet port and incorporating a bleed non-return valve the plunger being biased toward a position wherein the inlet non-return valve closes-off the inlet port, characterised in that the bleed chamber is defined between the inlet non-return valve and the plunger which are relatively movable to open and close the bleed chamber and the effective areas on which pressure fluid acts are such that related movement of the plunger and the inlet non-return valve occurs to close the bleed chamber so cutting off communication between the bleed chamber and the outlet port, below the closing pressure of the valve element. Because the bleed non-return valve is only active between valve opening and closing pressure, all sound systems can be completely protected against failure in any other system below valve closing pressure.

Another advantage of a protection valve according to this invention is that the valve elements can be identical, thus facilitating manufacture, even for multiple systems in which service systems are charged preferentially.

Other features of this invention are referred to in the appendant claims and in the following description of a preferred embodiment of the invention with reference to the accompanying drawings of which:

Figure 1 is a diagram of a typical pneumatic vehicle braking circuit in which compressed air is distributed to the various systems via a system protection valve according to this invention.

Figure 2 is a part cross-section of the system protection valve used in the circuit of Figure 1 having four identical valve elements, and

Figure 3 is an enlarged diagrammatic view of one of the said valve elements and

Figure 4 is an enlarged view similar to Figure 3 but of a modified valve element.

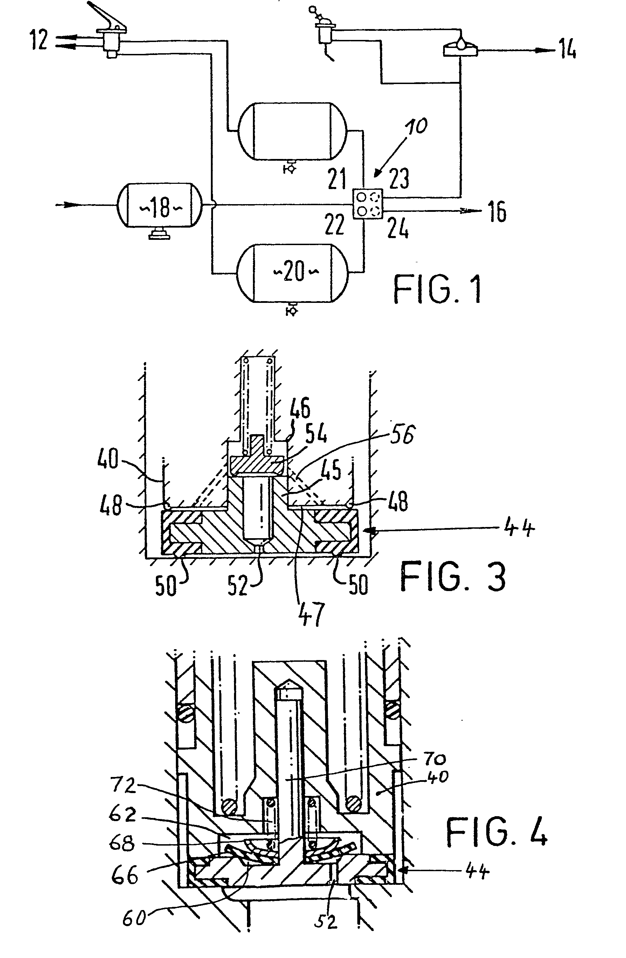

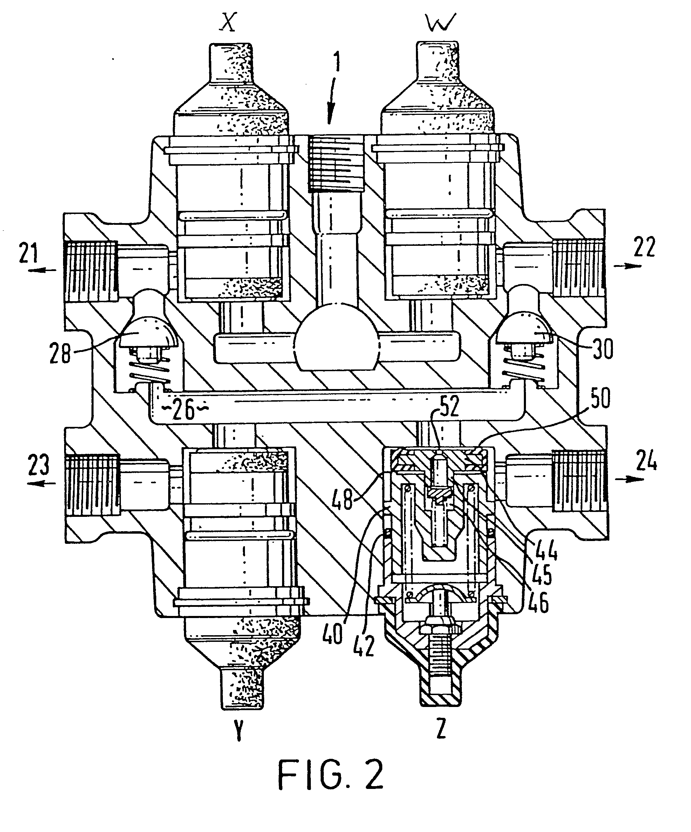

Figure 1 shows a system protection valve 10 connected in a pneumatic vehicle braking circuit having a service braking systems 12, spring parking brake system 14 and auxiliaries 16. Compressed air is delivered to the inlet 1 of the system protection valve 10 from a reservoir 18 connected to a compressor (not shown) and is distributed to the service system 12 via service reservoirs 20 connected to outlet ports 21 and 22. The spring parking brakes and auxiliary systems are connected to supplementary outlet ports 23 and 24 of the system protection valve 10.

Referring now to Figures 2 and 3, the valve 10 has four identical valve elements W, X, Y, Z of which elements W and X are associated with the service systems and elements Y and Z are associated with the supplementary systems 14 and 16, communicate with a flow path 26 interconnecting the outlet ports 21 and 22 via spring loaded non-return valves 28 and 30. Hence, the service systems are charged preferentially.

Each of the valves W, X, Y, and Z have a plunger 40 which is sealed by an O-ring 42 and loaded by a pre-set spring determining the opening pressure of the valve element. The plunger 40 carries an inlet non-return valve 44 having a boss 45 which is a clearance fit in a cylindrical recess 46 of the plunger 40, and seating on a circular lip or rim 48 around the face of the plunger. A smaller diameter rim or lip 50 on the opposite face of the non-return valve 44 co-operates with a fixed seat on the valve housing to close off communication with the inlet port 1 in the case of valve elements W and X or the flowpaths 26 in the case of supplementary valve elements Y and Z.

The valve 44 has a bleed hole 52 normally closed by a spring-loaded valve 54 which seats on the face of the boss 45 within the recess 46 to close off communication via the clearance 56 between the boss 45 and the recess 46 (represented in figure 3 by a flowpath shown dotted) with a bleed chamber 47 defined between the end face of the plunger 40 and the inlet non-return valve 44 by lip or rim 48.

To charge the circuit, air from the compressor or supply reservoir 18 is directed to valve elements W and X pressure in the bleed chamber 47 thus building-up through the bleed holes 52 to act on the larger seat diameter defined by the lip or rim 48. When the load balances the opposing spring load, the plunger 40 lifts to permit air flowing through the bleed hole 52 to pass to the service reservoirs via ports 21 and 22. The inlet non-return valve 44 opens when the pressure of air increases to the point at which the pressure acting on the seat defined by the smaller lip or rim equals the opposing spring load.

This pressure is the valve opening pressure. Once the valve is open this pressure acts on the O-ring diameter (42) which is larger than the diameter of lip 50 so providing a further boost to valve opening. In this state, the valve 44 acts as a non-return valve in the direction of flow. After opening of the service valve elements W and X, air passes through the supplementary non-return valves 28 and 30 to valve elements Y and Z thus charging the supplementary systems. When charging ceases, the non-return valves 44, 28 and 30 re-seat but the plunger 40 remain unseated by virtue of back pressure in the associated systems.

As air pressure falls through usage or as a result of failure, the valve elements close at a pressure equal to the spring load divided by the area of O-ring 42 internal diameter. This is referred to as the closing pressure.

Upon excessive loss of pressure in one of the service system the appropriate plunger 40 reseats under the action of the associated spring load, thus isolating the failed system. The remaining sound system can still be charged but only to the opening pressure of the element in the failed system. The elements associated with the service systems are set out such that their opening pressures are sufficient to enable the remaining service systems to provide secondary or residual braking. Thus operation, in the event of service system failure, is as for the conventional protection valve described above.

In the event of a supplementary system failure, however, efficiency of the whole system is still high enough so that all sound systems can still be pumped up above zero pressure. This is because the bleed by-pass is inactive when the plunger 40 seats upon the floating valve 44 (i.e. when the bleed chamber 47 is closed) below closing pressure. In other respects the valve operates as a conventional valve to protect against supplementary system failure.

A modified valve element which can be used instead of the valve element shown in Figures 2 and 3, is shown, in Figure 4. In this case the non-return valve 44 has an off-set bleed hole 52 communicating with an annular recess 60 surrounding the valve stem 70 on one side of the non-return valve 44. This recess is normally covered by a spring loaded bleed non-return valve 54 housed in a recess 62 in the face of the plunger 40.

The bleed non-return valve comprises a flexible disc 66 of rubber or the the like, which is pressed into its closed position (Figure 4) by a spring loaded domed element 68 surrounding the stem 70 of the non-return valve and carried in a stepped recess 72 in the plunger concentric with the recess 62. In operation, the modified valve element of Figure 4 is identical with the valve element of Figure 3.

## Claims

1. A protection valve for fluid-operated systems, having two or more valve elements (W,X,Y,Z,) each of which opens against a bias to admit fluid under pressure to an associated fluid operated system (12,14,16) and comprising a plunger (40) controlling communication between an inlet port (1) for fluid under pressure and an outlet port (21,22,23,24) for connection to the associated system, and carrying an inlet non-return valve (44) which is movable relative to the plunger and has therethrough a bleed hole (52) leading via a bleed chamber (47) to the outlet port (21,22,23,24) and incorporating a bleed non-return valve (54), the plunger (40) being biased toward a position wherein the inlet non-return valve (44) closes-off the inlet port, characterised in that the bleed chamber is defined between the inlet non-return valve (44) and the plunger (40) which are relatively movable to open and close the bleed chamber (47) and the effective areas on which pressure fluid acts are such that relative movement of the plunger (40) and the inlet non-return valve (44) occurs to close the bleed chamber (47), so cutting-off communication between the bleed chamber (47) and the outlet port (21,22,23,24) below the closing pressure of the valve element.

2. A valve according to claim 1 wherein one or more (Y,Z) of the valve elements communicates for the supply thereto of fluid under pressure via a supplementary non-return valve (28,30) with the outlet port of another (W,X) of the valve elements whereby the fluid operated system associated with the said other valve element (Y,Z) is charged preferentially.

3. A valve according to claim 1 or claim 2 wherein the bleed hole (52) is normally closed by the bleed non-return valve (54) carried in a recess in the plunger (40).

4. A valve according to claim 3 wherein the inlet non-return valve 44 has on one side a central boss (45) through which the bleed hole (52) passed and wherein the boss is slidingly received in the said recess in the plunger (2), the recess also containing the bleed non-return valve (54) which is biased against the boss to close the bleed hole.

5. A valve according to claim 3 wherein the bleed hole (52) opens in to a recess (60) on one side of the inlet non-return valve (44) confronting the plunger (40) and wherein the bleed non-return valve (66,68) is disposed in a recess (62) in the end face of the plunger and comprises a spring loaded domed element pressing a flexible disc (66) to close the bleed hole recess (60).

## Revendications

1. Soupape de protection pour systèmes à commande par fluide, comportant deux ou plusieurs éléments de soupape (W, X, Y, Z) s'ouvrant chacun contre l'action d'une force de rappel, pour permettre l'admission du fluide sous pression dans un système à commande par fluide associé (12, 14, 16), et comprenant un plongeur (40) commandant la communication entre un orifice d'entrée (1) du fluide sous pression et un ofifice de sortie (21, 22, 23, 24) assurant la liaison avec le système associé et portant un clapet de non retour d'entrée (44) mobile par rapport au plongeur et traversé par un trou de soutirage (52) conduisant à l'orifice de sortie (21, 22, 23, 24) par l'intermédiaire d'une chambre de soutirage (47) et comportant un clapet de non retour de soutirage (54), le plongeur (40) étant poussé vers une position dans laquelle le clapet de non retour d'entrée (44) ferme complètement l'orifice d'entrée, soupape caractérisée en ce que la chambre de soutirage est formée entre le clapet de non retour d'entrée (44) et le plongeur (40) pouvant se déplacer l'un par rapport à l'autre pour ouvrir et fermer la chambre de soutirage (47), et en ce que les surfaces effectives sur lesquelles agit la pression du fluide sont telles que le mouvement relatif du plongeur (40) et de clapet de non retour d'entrée (44) permet de fermer la chambre de soutirage (47) en coupant ainsi la communication entre la chambre de soutirage (47) et l'orifice de sortie (21, 22, 23, 24) au-dessous de la pression de fermeture de l'élément de soupape.

2. Soupape selon la revendication 1, caractérisée en ce qu'un ou plusieurs (Y, Z) des éléments de soupape communiquent, pour être alimentés en fluide sous pression par l'intermédiaire d'un clapet de non retour supplémentaire (28, 30), avec l'orifice de sortie d'un autre (W, X) des éléments de soupape, ce qui permet ainsi de charger prioritairement le système à commande par fluide associé à l'autre élément de soupape (Y, Z).

3. Soupape selon l'une quelconque des revendications 1 et 2, caractérisée en ce que le trou de soutirage (52) est normalement fermé par le clapet de non retour de soutirage (54) porté par une cavité de plongeur (40).

4. Soupape selon la revendication 3, caractérisée en ce que le clapet de non retour d'entrée (44) comporte, d'un coté, un bossage central (45) à travers lequel passe le trou de soutirage, et en ce que le bossage vient glisser dans la cavité du plongeur (2), cette cavité contenant également le clapet de non retour de soutirage (54) poussé contre le bossage de manière à fermer le trou de soutirage.

5. Soupape selon la revendication 3, caractérisée en ce que le trou de soutirage (52) débouche dans une cavité (60) d'un coté du clapet de non retour d'entrée (44) situé en face du plongeur (40), et en ce que le clapet de non retour de soutirage (66, 65) est placé dans une cavité (62) de la face d'extrémité du plongeur et comporte un élément de dôme poussé par un ressort, de manière à comprimer un disque flexible (66) pour fermer la cavité du trou de soutirage (60).

## Patentansprüche

1. Schutzventil für fluid-betriebene Systeme, welches zwei oder mehr Ventilelemente (W, X, Y, Z) aufweist, von denen jedes zur Beaufschlagung eines zugehörigen fluid-betriebenen Systems (12, 14, 16) mit unter Druck stehendem Fluid gegen eine Vorbelastung öffnet und einen die Verbindung zwischen einer Einlaßöffnung (1) für unter Druck stehendes fluid und einer zu dem zugehörigen System verbindenden Auslaßöffnung (21, 22, 23, 24) steuernden Kolben (40) umfaßt, der ein Einlaß-Rückschlagventil (44) trägt, welches bezüglich des Kolbens beweglich ist und eine es durchsetzende Nebenstrombohrung (52) aufweist, die über eine Nebenstromkammer (47) zur Auslaßöffnung (21, 22, 23, 24) führt und ein Nebenstrom-Rückschlagventil (54) enthält, wobei der Kolben (40) in eine Stellung vorbelastet ist, in welcher das Einlaß-Rückschlagventil (44) die Einlaßöffnung verschließt, dadurch gekennzeichnet, daß die Nebenstromkammer zwischen dem Einlaß-Ruckschlagventil (44) und dem Kolben (40) definiert ist, welche die Nebenstromkammer (47) öffnend und schließend relativ zu einander beweglich sind, und daß die wirksamen Flächen, auf welche Druckfluid einwirkt, so gewählt sind, daß eine die Nebenstromkammer (47) schließende Relativbewegung von Kolben (40) und Einlaß-Rückschlagventil (44) auftritt und so die Verbindung zwischen der Nebenstromkammer (47) und der Auslaßöffnung (21, 22, 23, 24) unterhalb des Schließdrucks des Ventilelements unterbrochen wird.

2. Ventil nach Anspruch 1, dadurch gekennzeichnet, daß ein oder mehrere (Y, Z) der Ventilelemente für die Zuführung von unter Druck stehendem Fluid an dieses über ein zusätzliches Rückschlagventil (28, 30) mit der Auslaßöffnung eines anderen (W, X) der Ventilelemente in Verbindung steht, wodurch das zu dem anderen Ventilelement (W, X) gehörige fluid-betriebene System bevorzugt geladen wird.

3. Ventil nach Anspruch 1 oder 2, dadurch gekennzeichnet, daß die Nebenstrombohrung (52) in Ruhe durch das in einer Ausnehmung des Kolbens (40) sitzende Nebenstrom-Rückschlagventil (54) geschlossen ist.

4. Ventil nach Anspruch 3, dadurch gekennzeichnet, daß das Einlaß-Rückschlagventil (44) auf der einen Seite eine zentrale Erhebung (45) aufweist, durch welche die Nebenstrombohrung geführt ist, und daß die Erhebung gleitend in der Ausnehmung des Kolbens (40) aufgenommen ist, wobei die Ausnehmung das Nebenstrom-Rückschlagventil (54), welches gegen die Erhebung die Nebenstrombohrung verschließend vorbelastet ist, ebenfalls enthält.

5. Ventil nach Anspruch 3, dadurch gekennzeichnet, daß die Nebenstrombohrung (52) in eine Ausnehmung (60) auf der einen, dem Kolben (40) zugekehrten Seite des Einlaß-Rückschlagventils (44) mündet, und daß das Nebenstrom-Rückschlagventil (66, 68) in einer Ausnehmung (62) der Endfläche des Kolbens angeordnet ist, und ein federbelastetes kuppelförmiges Element umfaßt, welches gegen eine biegsame Scheibe (66) die Nebenstrombohrungsausnehmung (60) verschließend drückt.

**0018770**

FIG. 1

FIG. 3

FIG. 4

1

FIG. 2